# EUROPEAN PATENT APPLICATION

(11) **EP 2 071 756 A1**
(43) Date of publication of application: **17.06.2009**
(21) Application number: 07807163.6
(22) Date of filing: 12.09.2007
(51) Int. Cl.: H04L 1/00, H04L 1/16, H04L 29/08, H04M 11/00

(54) **COMMUNICATION DEVICE, COMMUNICATION METHOD, AND RECORDING MEDIUM**

(30) Priority: 12.09.2006 JP 2006247080; 10.09.2007 JP 2007233810
(71) Applicant: Yamaha Corporation, Hamamatsu-shi, Shizuoka 430-8650 (JP)
(72) Inventor: YAMADA, Yuichi, Hamamatsu-shi, Shizuoka (JP)
(74) Representative: Wagner, Karl H.
(86) International application number: PCT/JP2007/067756
(87) International publication number: WO 2008/032747

(57) **Abstract**

In transmitting data between a server device and a client device or between communication terminals, a data transfer rate is set in response to an available bandwidth, an application of the data, and the like not to cause waste of the network. A controlling portion detects a packet loss caused per transmission of data, and then chooses a compression mode whose data transfer rate is low when the packet loss is detected. In contrast, the controlling portion counts a time required from the data transmission (a reciprocation delay time) in such a situation that no packet loss is caused, and chooses a compression mode whose data transfer rate is high when the reciprocation delay time is sufficiently small. As the method of choosing the compression mode, for example, the method of switching a codec into another codec or changing a compression ratio being set in the codec may be employed.

## Description

### Technical Field

The present invention relates to a communication device, a communication method, and a recording medium.

### Background Art

Like the streaming distribution of music or moving picture, the technology to distribute music data or moving picture data to a client device such as a personal computer, or the like via a communication network and cause the client device to reproduce the music or the moving picture responding to the data becomes widely available (Non-Patent Literature 1).
In the data communication of this type, commonly a server device transmits packets being produced by splitting the data into a predetermined size at a predetermined timing. Therefore, in order to cause the client device to reproduce the moving picture, for example, without trouble (without interruption, degradation of picture quality, or the like), an amount of transmission data per unit time (referred to as a "data transfer rate" hereinafter) must be kept in excess of a predetermined amount.
Non-Patent Literature 1: RFC1889: [online]Internet <URL: http://www.ietf.org/rfc/rfc1889.txt>

### Disclosure of the Invention

### Problems that the Invention is to Solve

There is a limitation to a bandwidth (amount of transmission data per unit time) that is available by the network. Therefore, the technology to set the data transfer rate to individual client devices in answer to the available bandwidth, the application of the data, etc. not to cause waste of the network is needed.
The present invention has been made to satisfy the above needs, and it is an object of the present invention to provide the technology to detect a bandwidth of the network utilized in transmitting data from a server device to a client device or transmitting data between communication terminals such that the data are transmitted without trouble not to cause waste of the network.

### Means for Solving the Problems

A communication device according to the present invention for holding a communication with a destination device via a communication network, includes:
a controlling section which compresses data in a first compression mode;
a transmitting section which transmits the compressed data to the destination device via the communication network; and
a receiving section which receives an acknowledge message via the communication network when the destination device transmits the acknowledge message indicating an effect that the compressed data are received;
wherein the controlling section decides whether or not the first compression mode is to be continued, based on a state of the acknowledge message received by the receiving section, and chooses a second compression mode and compresses the data in the second compression mode if it is decided that the first compression mode is not to be continued.

Another communication device according to the present invention for holding a communication with a destination device via a communication network, includes:
a controlling section which compresses data by a first codec;
a transmitting section which transmits the compressed data to the destination device via the communication network; and
a receiving section which receives an acknowledge message via the communication network when the destination device transmits the acknowledge message indicating an effect that the compressed data are received;
wherein the controlling section decides whether or not the data compression by using the first codec is to be continued, based on a state of the acknowledge message received by the receiving section, and chooses a second codec and compresses the data by using the second codec if it is decided that the data compression is not to be continued.

In the above configuration, the communication device according to the present invention further includes a storing section which stores a table that correlates codecs with transfer rates being set in the codecs; and wherein, when the acknowledge message is not received by the receiving section, the controlling section chooses a codec being correlated with a transfer rate lower than a transfer rate of the first codec in the table as the second codec, and compresses the data by using the second codec.
Also, in the above configuration, the communication device according to the present invention further includes a storing section which stores a table that correlates codecs with transfer rates being set in the codecs; and wherein, when the acknowledge message is received by the receiving section earlier than a predetermined time, the controlling section chooses a codec being correlated with a transfer rate higher than a transfer rate of the first codec in the table as the second codec, and compresses the data by using the second codec.

A communication device according to the present invention for holding a communication with a destination device via a communication network, includes:
a controlling section which compresses data by a codec in which a plurality of data transfer rates are set and a compression ratio that satisfies a first data transfer rate is set;
a transmitting section which transmits the data compressed by the codec to the destination device via the communication network; and
a receiving section which receives an acknowledge message via the communication network when the destination device transmits the acknowledge message indicating an effect that the compressed data are received;
wherein the controlling section chooses a second data transfer rate based on a state of the acknowledge message received by the receiving section, and compress the data by using the codec in which a compression ratio that satisfies the second data transfer rate is set.

In the communication device according to the present invention, in the above configuration, when the acknowledge message is not received by the receiving section, the controlling section chooses a data transfer rate that is lower than the first data transfer rate as the second data transfer rate, and compresses the data by using the codec in which a compression ratio that satisfies the chosen data transfer rate is set.
In the communication device according to the present invention, in the above configuration, when the acknowledge message is received by the receiving section earlier than a predetermined time, the controlling section chooses a data transfer rate that is higher than the first data transfer rate as the second data transfer rate, and compresses the data by using the codec in which a compression ratio that satisfies the chosen data transfer rate is set.

A communication method according to the present invention of holding a communication with a destination device via a communication network, includes:
compressing data in a first compression mode;
transmitting the compressed data to the destination device via the communication network;
receiving an acknowledge message via the communication network when the destination device transmits the acknowledge message indicating an effect that the compressed data are received;
deciding whether or not the first compression mode is to be continued, based on a state of the received acknowledge message; and
choosing a second compression mode and compressing the data in the second compression mode if it is decided that the first compression mode is not to be continued.

Another communication method according to the present invention of holding a communication with a destination device via a communication network, includes:
compressing data by a first codec;
transmitting the compressed data to the destination device via the communication network;
receiving an acknowledge message via the communication network when the destination device transmits the acknowledge message indicating an effect that the compressed data are received;
deciding whether or not the data compression by using the first codec is to be continued, based on a state of the received acknowledge message; and
choosing a second codec and compressing the data by using the second codec if it is decided that the data compression is not to be continued.

A still another communication method according to the present invention of holding a communication with a destination device via a communication network, includes:
compressing data by a codec in which a plurality of data transfer rates are set and a compression ratio that satisfies a first data transfer rate is set;
transmitting the data compressed by the codec to the destination device via the communication network;
receiving an acknowledge message via the communication network when the destination device transmits the acknowledge message indicating an effect that the compressed data are received;
choosing a second data transfer rate based on a state of the received acknowledge message; and
compressing the data by using the codec in which a compression ratio that satisfies the second data transfer rate is set.

A computer-readable recording medium according to the present invention for storing a computer-readable program that causes a computer to function as:
compressing data in a first compression mode;
transmitting the compressed data to the destination device via the communication network;
receiving an acknowledge message via the communication network when the destination device transmits the acknowledge message indicating an effect that the compressed data are received;
deciding whether or not the first compression mode is to be continued, based on a state of the received acknowledge message; and
choosing a second compression mode and compressing the data in the second compression mode if it is decided that the first compression mode is not to be continued.

Another computer-readable recording medium according to the present invention for storing a computer-readable program that causes a computer to function as:
compressing data by a first codec;
transmitting the compressed data to the destination device via the communication network;
receiving an acknowledge message via the communication network when the destination device transmits the acknowledge message indicating an effect that the compressed data are received;
deciding whether or not the data compression by using the first codec is to be continued, based on a state of the received acknowledge message; and
choosing a second codec and compressing the data by using the second codec if it is decided that the data compression is not to be continued.

A still another computer-readable recording medium according to the present invention for storing a computer- readable program that causes a computer to function as:
compressing data by a codec in which a plurality of data transfer rates are set and a compression ratio that satisfies a first data transfer rate is set;
transmitting the data compressed by the codec to the destination device via the communication network;
receiving an acknowledge message via the communication network when the destination device transmits the acknowledge message indicating an effect that the compressed data are received;
choosing a second data transfer rate based on a state of the received acknowledge message; and
compressing the data by using the codec in which a compression ratio that satisfies the second data transfer rate is set.

### Brief Description of the Drawings

[FIG.1] A block diagram showing a configuration of a communication system to which a communication terminal according to an embodiment of the present invention is connected.
[FIG.2] A block diagram showing a configuration of a communication terminal 100.
[FIG.3] A view showing a configuration of a RTP packet.
[FIG.4] A list used to correlate a codec with a data transfer rate (bit rate).
[FIG.5] A flowchart showing a flow of data transmission.
[FIG.6] A flowchart showing a flow of communication optimizing process.
[FIG.7] A flowchart showing a flow of data loss handling process.

### Description of Reference Numerals and Signs

10 communication system, 12 communication IF portion, 13 controlling portion, 14 storing portion (14a: ROM, 14b: RAM), 15 operating portion, 16 displaying portion, 17 timer portion, 18 sound inputting portion, 19 bus, 20 microphone, 21 A/D converting portion, 22 sound outputting portion, 23 D/A converting portion, 24 speaker, 100, 100A, 100B communication terminal, 200 communication network

### Best Mode for Carrying Out the Invention

A communication terminal as an embodiment of the present invention will be explained with reference to the drawings hereinafter.

### (A: Configuration)

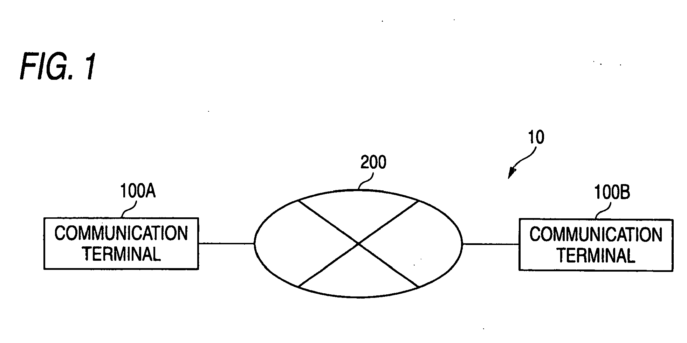

FIG.1 is a block diagram showing a configurative example of a communication system 10 including a communication terminal 100A and a communication terminal 100B as an embodiment of the present invention. As shown in FIG.1, in the communication system 10, the communication terminal 100A and the communication terminal 100B are connected to a communication network 200 via cable. In the present embodiment, the case where two communication terminals are connected to the communication network 200 is illustrated. But it is of course that three communication terminals or more may be connected.
In this case, the communication terminal 100A and the communication terminal 100B have the same configuration mutually. In the following, both communication terminals are referred to as the communication terminal 100 generically when there is no need to discriminate between the communication terminal 100A and the communication terminal 100B.

The communication network 200 is the Internet, for example, and is equipped with a large number of network equipments such as routers, and the like although detailed illustration is omitted. The communication network 200 is provided to relay the data communications that are handled between the communication terminal 100A and the communication terminal 100B according to predetermined communication protocols.

In the present embodiment, respective communication protocols described hereunder are employed as the communication protocols. More particularly, Real-time Transport Protocol (abbreviated as "RTP" hereinafter) is used as the communication protocol of the application layer, UDP is used as the communication protocol of the transport layer, and IP is used as the communication protocol of the network layer. An IP address is allocated to the communication terminal 100A and the communication terminal 100B respectively, and these terminals are identified collectively on the Internet.
In the present embodiment, the case where UDP is used as the communication protocol of the transport layer is explained. But it is of course that TCP may be used. Since UDP and IP are the communication protocols that are used widely in common, their explanation will be omitted herein. Merely explanation of RTP will be given hereunder.

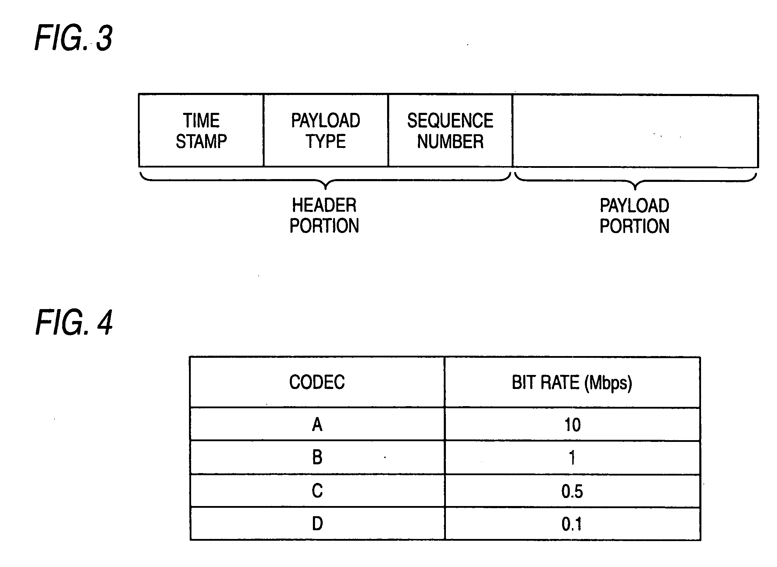

RTP is the communication protocol used to provide a communication service that transmit/receive the sound data or the video data having real-time characteristics on an end-to-end basis, and details are specified in RFC1889. In RTP, the data transfer between the communication terminals is carried out by producing the RTP packet and transmitting/ receiving this RTP packet. As shown in FIG.3, like the packet as a data transfer unit in IP and the segment as a data transfer unit in TCP, the RTP packet is composed of a header portion and a payload portion.

Three kinds of data, i.e., time stamp, payload type, and sequence number, are set in the header portion. Here, the time stamp is data indicating a time (a time elapsed after a start of the sound communication is instructed). The payload type is data used to cause the destination of communication message to identify the type of communication message. In the present embodiment, either of two types of numerals "1", "2" is written into the payload type. Concretely, "1" is written into the message type for data transmitting message, and "2" is written into the message type for reception notifying message. The sequence number is an identifier used to identify uniquely each packet. For example, when one sound data is divided into plural RTP packets, sequential numbers such as 1, 2, 3, ... are affixed to the packets respectively.

For example, in the data transmitting message, sound data corresponding to a predetermined time (in the present embodiment, 20 msec) is written into the payload portion. Also, in the reception notifying message, the sequence number of the received data transmitting message and the time stamp written in each RTP packet to correlated with the sequence number are written into the payload portion.

Next, a hardware configuration of the communication terminal 100 will be explained hereunder.

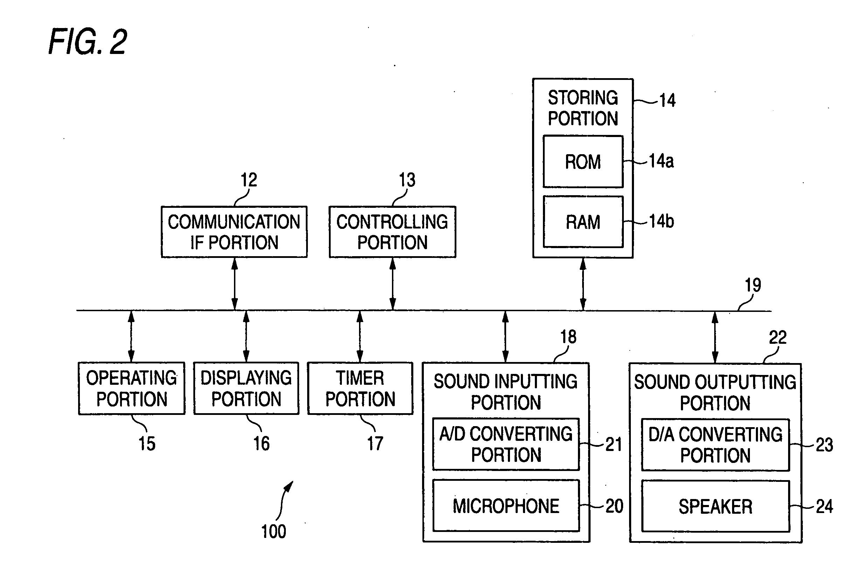

FIG.2 is a block diagram showing an example of the hardware configuration of the communication terminal 100. As shown in FIG.2, the communication terminal 100 is equipped with a communication IF portion 12, a controlling portion 13, a storing portion 14, an operating portion 15, a displaying portion 16, a timer portion 17, a sound inputting portion 18, a bus 19, and a sound outputting portion 22.
In the following explanation, when it should be discriminated to which communication terminal the concerned configuration of the communication terminal 100 belongs, the concerned controlling portion 13 of the communication terminal 100A is represented by affixing an alphabetical subscript "A" like the controlling portion 13A, for example.

The controlling portion 13 is CPU (Central Processing Unit), for example. The controlling portion 13 either performs the characteristic operations of the present invention or controls the operations of respective portions of the communication terminal 100, by executing various programs stored in the storing portion 14 described later.

The communication IF portion 12 is NIC (Network Interface Card), for example, and is connected to the communication network 200 via cable. The communication IF portion 12 sends out the IP packets, which are obtained by encapsulating sequentially the RTP packets transferred from the controlling portion 13 in accordance with the communication protocol of the lower layer, to the communication network 200. Here, the encapsulation denotes such a procedure that the UDP segment in which the RTP packet is written in the payload portion should be produced and then the IP packet in which the UDP segment is written in the payload portion should be produced. Also, the communication IF portion 12 receives the IP packet via the communication network 200, then reads out the RTP packet being encapsulated in the IP packet by applying an opposite process to the encapsulation, and then transfers this packet to the controlling portion 13.

The storing portion 14 consists of ROM (Read Only Memory) 14a and RAM (Random Access Memory) 14b.
The ROM 14a stores the data and the control programs used to cause the controlling portion 13 to implement the characteristic functions. As an example of the control programs, the codec as the software to compress/expand the data may be considered. Plural kinds of codecs are stored, and respective codecs compress the data at different compression rates and transmit/receive the data at different bit rates. Also, as an example of the data, the list in which the data of the bit rates corresponding to respective codecs are stored may be considered.
The RAM 14b is utilized as a work area by the controlling portion 13 that operated in accordance with various programs, and stores the sound data received from the sound inputting portion 18.

The operating portion 15 is a keyboard, a mouse, or the like, for example. When the operator of the communication terminal 100 operates the operating portion 15 to input any input, the operating portion 15 transfers the data indicating the contents of operation to the controlling portion 13.
The displaying portion 16 is a monitor, or the like, for example. The displaying portion 16 displays various data that the communication terminal 100 has under control of the controlling portion 13.
The timer portion 17 counts an elapsed time when it receives the signal to the effect that the communication terminal 100 starts the sound communication, from the controlling portion 13. Also, the timer portion 17 provides an elapsed time to the controlling portion 13 in answer to the request issued from the controlling portion 13.

The sound inputting portion 18 contains a microphone 20 and an analog/digital (abbreviated as "A/D" hereinafter) converting portion 21. The microphone 20 picks up the user's voice, then produces a sound signal (analog signal) in response to the voice, and then outputs the signal to the A/D converting portion 21. The A/D converting portion 21 applies the A/D conversion to the sound signal transferred from the microphone 20, and transfers digital data (referred to as "sound data" hereinafter) as the converted result to the controlling portion 13.

The sound outputting portion 22 applies the sound reproducing control in response to the sound data transferred from the controlling portion 13, and contains a D/A converting portion 23 and a speaker 24. The D/A converting portion 23 produces the sound signal by applying the opposite process to that executed in the A/D converting portion 21 (i.e., D/A conversion) to data sequence of the sound data transferred from the controlling portion 13, and transfers the voice signal to the speaker 24. Also, the speaker 24 emits the sound corresponding to the sound signal transferred from the D/A converting portion 23.
With the above, explanation of the hardware configuration of the communication terminal 100 is completed.

As explained above, the configuration of the communication terminal 100 according to the present embodiment is similar to the hardware configuration of the common computer equipment. The characteristic functions of the communication terminal 100 according to the present invention are accomplished by software modules explained hereunder.

The functions given to the communication terminal 100 when the controlling portion 13 executes the control program stored in the ROM 14a are classified roughly into four functions, i.e., (1) a reciprocation delay time counting function, (2) a data compression ratio controlling function, (3) a RTP packet producing function, and (4) a RTP packet transmitting/receiving function. While taking as an example the case where the communication terminal 100A executes the transmission of the sound data to the communication terminal 100B, these functions will be explained hereunder.

The reciprocation delay time counting function is a function used to count a time (reciprocation delay time) required until the controlling portion 13A receives a message to the effect that the data are received from a destination terminal after it transfers the data to the destination terminal. When the reciprocation delay time is counted, the RTCP (RTP Control Protocol) packet is utilized.

More particularly, the communication terminal 100A writes the time stamp into a sender report SR, and then transmits the sender report SR to the communication terminal 100B. The communication terminal 100B send back a receiver report RR to the communication terminal 100A in answer to the sender report SR received from the communication terminal 100A. At this time, the communication terminal 100B counts a time required until the communication terminal 100B sends back the receiver report RR after it received the sender report SR, and writes the value into the receiver report RR. The communication terminal 100A, when received the receiver report RR, calculates a difference between a time at which the terminal 100A transmits the sender report SR and a time at which the terminal 100A receives the receiver report RR, and calculates the reciprocation delay time by subtracting a time required until the terminal 100B sends back the receiver report RR after it receives the sender report SR and written in the receiver report RR, from the difference value.

Next, the data compression ratio controlling function will be explained hereunder.
The controlling portion 13A compresses the sound data of its own equipment by executing the codec installed into the communication terminal 100A, and then outputs the data at a predetermined transfer rate (bit rate). The user can choose either of an automatic mode in which the controlling portion 13A controls the bit rate automatically in accordance with a predetermined rule and a manual mode in which the user control the bit rate manually.

When the user chooses the automatic mode, the controlling portion 13A controls the bit rate of the sound data in accordance with the rule explained hereunder.
In starting the data communication, the controlling portion 13A chooses the codec having a maximum bit rate by referring to the ROM 14aA. The higher bit rate just yields a higher grade (quality) of the communication data. The higher bit rate is the most desirable condition, so long as the conditions of the communication network 200 allows.

Then, the value of the bit rate at this time is stored in the RAM 14bA, and an initial value of the reciprocation delay time is set in the RAM 14bA. Actually the initial value of the reciprocation delay time may be counted by using the above reciprocation delay time counting function, or a predetermined value may be stored in advance in the ROM 14aA and may be read.
Then, the normal communication of the sound data using the RTP packet is started by using the RTP packet producing function and the RTP packet transmitting/receiving function described later.

In the normal data communication, when the situation that the RTP packet does not arrive at the terminal on the destination side (packet loss) is caused, the controlling portion 13A switches the codec into another codec that is correlated with the bit rate that is lower than the bit rate stored in the RAM 14bA by one level. Also, the controlling portion 13A counts the reciprocation delay time after the codec is switched, and rewrites the value of the reciprocation delay time in the RAM 14bA by the counted value.

In contrast, when no packet loss is caused, the controlling portion 13A counts the reciprocation delay time by using the above reciprocation delay time counting function. When the counted reciprocation delay time is smaller than the reciprocation delay time stored in the RAM 14bA by a predetermined rate or more, the controlling portion 13A switches the bit rate into another bit rate that is higher by one level. In the present embodiment, the controlling portion 13A switches the codec that is stored in the ROM 14a and is used at present into another codec whose bit rate is higher by one level.
Then, the controlling portion 13A counts the reciprocation delay time after the codec is switched, and rewrites the value of the reciprocation delay time in the RAM 14bA by the counted value.

In this case, when the user chooses the manual mode, such user inputs the numeral indicating the bit rate of the sound data from the operating portion 15A by looking at the value of the available bandwidth displayed on the displaying portion 16A, or the like.
With the above, the data compression ratio controlling function is explained.

Next, the RTP packet producing function will be explained hereunder.
The microphone 20A produces the analog sound signal from the user's voice. This sound signal is converted into the digital sound data by the A/D converting portion 21, and then the converted sound data is written into the RAM 14bA. The controlling portion 13A reads the sound data written in the RAM 14bA sequentially every predetermined time (in the present embodiment, 20 msec) and applies the foregoing compression to the sound data for the predetermined time. As shown in FIG.3, the RTP header is attached to the sound data, to which the compression is applied, for the predetermined time, and the RTP packet is produced. The produced RTP packet is transferred to the communication IF portion 12.
With the above, the RTP packet producing function is explained.

Finally, the RTP packet transmitting/receiving function will be explained hereunder.
The communication IF portion 12, when received the produced RTP packet from the controlling portion 13A, transmits the RTP packet by transferring the RTP packet to the communication protocol in the lower layer. In contrast, the controlling portion 13B cuts out the payload portion of the RTP packet in the communication terminal 100B that receives the RTP packet.
With the above, the RTP packet transmitting/receiving function is explained.

### (B: Operation)

Next, the operation that the communication terminal 100 performs will be explained with reference to the drawings hereunder.
In the following, the operation that the communication terminal 100 performs when a user of the communication terminal 100A (referred to as a "user A" hereinafter) enters a comment and a user of the communication terminal 100B (referred to as a "user B" hereinafter) listens to the comment in a situation that the user A and the user B are holding a remote talk session by exchanging voice data communications interactively will be explained.

It is assumed that, in starting the present operation, first the communication terminal 100A is transmitting the sound data in the maximum available bandwidth.
Also, it is assumed that, because the communication network 200 is utilized by a plurality of communication terminals (not shown), the available bandwidth of the network lines being utilized to transmit/receive the sound data between the communication terminal 100A and the communication terminal 100B varies moment by moment.

### (B-1: Operational Example 1)

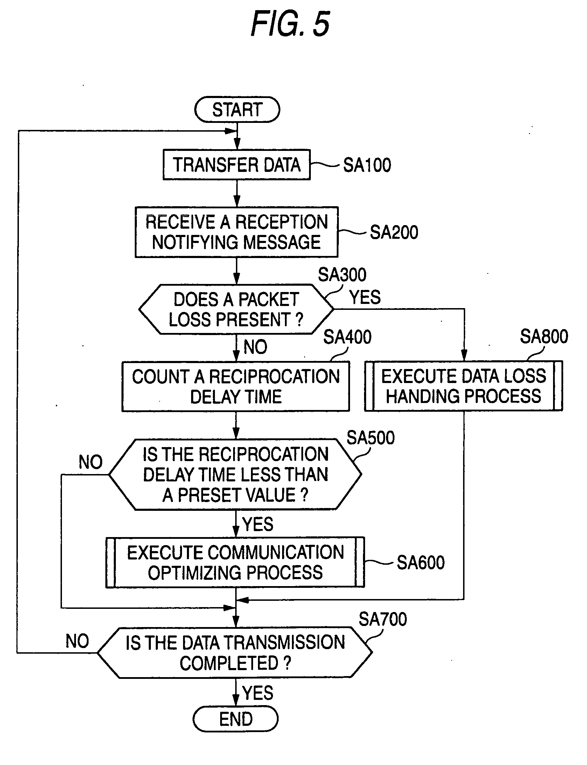

In the present operational example, the case where the transmission of sound data from the communication terminal 100A to the communication terminal 100B is carried out without trouble (neither a packet loss nor a timeout is caused) will be explained with reference to FIG.5 hereunder.
The microphone 20A produces the sound signal representing the voice when the voice is blown by the user A, and the A/D converting portion 21A converts the sound signal into the sound data. The controlling portion 13A produces the RTP packet from the sound data by using the RTP packet producing function, and then transmits the data to the communication terminal 100B (step SA100). At this time, the controlling portion 13A gives a time stamp indicating a transmission time to all packets. Also, the controlling portion 13A writes the sequence number of the transmitted packet in the RAM 14b after each transmission of the packet. In this fashion, the sound data arrives at the communication terminal 100B from the communication terminal 100A via the communication network 200.
The communication terminal 100B receives the packet. The controlling portion 13B sends back the reception notifying message containing the data regarding the sequence numbers of the received packets and the time stamps attached to respective packets, to the communication terminal 100A. The reception notifying message arrives at the communication terminal 100A from the communication terminal 100B via the communication network 200.

The controlling portion 13A receives the reception notifying message (step SA200). Then, the controlling portion 13A decides whether or not a packet loss occurs, comparing the sequence numbers written in the payload portion with the sequence numbers of the transmitted RTP (step SA300). If a packet loss occurs (step SA300; "Yes"), the controlling portion 13A applies the data loss handing process (step SA800). This data loss handing process will be explained in detail later. In contrast, if no packet loss occurs (step SA300; "No"), the controlling portion 13A executes the processes subsequent to step SA400. In this operational example, since the sound data are transmitted without trouble, the decision result in step SA300 is "No" and the processes subsequent to step SA400 are executed. In step SA400, the controlling portion 13A counts the reciprocation delay time by the reciprocation delay time counting function. The controlling portion 13A decides whether or not the reciprocation delay time is less than a previously specified value of the reciprocation delay time obtained immediately after the codec stored in the RAM 14bA is switched (step SA500). This specified value is set to 60 % of the reciprocation delay time obtained immediately after the codec stored in the RAM 14bA is switched, for example.

If the decision result in step SA500 is "Yes", the controlling portion 13A executes the communication optimizing process (step SA600). Then, the process goes to step SA700. In this case, the communication optimizing process in step SA600 will be explained in detail later. In contrast, if the decision result in step SA500 is "No", the process goes to step SA700 as it is. In step SA700, the controlling portion 13A decides whether or not the data transmission is completed. If the data transmission is not completed (step SA700; "No"), the controlling portion 13A causes the process to go back to step SA100 and transmits successively the data being not transmitted yet. In contrast, if the data transmission is completed (step SA700; "Yes"), the controlling portion 13A ends the process.

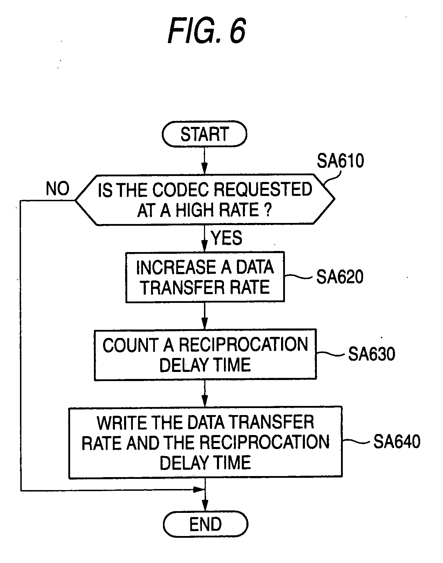

Then, details of the communication optimizing process in step SA600 will be explained with reference to a flowchart shown in FIG.6 hereunder. First, in step SA610, the controlling portion 13A decides whether or not the codec corresponding to a higher bit rate is present. If the decision result in step SA610 is "Yes", the controlling portion 13A increases a transfer rate of the sound data by changing the codec (step SA620). Then, the controlling portion 13A counts the reciprocation delay time (step SA630). Then, the controlling portion 13A stores the transfer rate (bit rate) obtained immediately after the codec is switched and the counted reciprocation delay time in the RAM 14b (step SA640). Then, the process is ended. In contrast, if the decision result in step SA61 0 is "No", the controlling portion 13A ends the process.

When the reciprocation delay time is sufficiently small in a situation that the data loss is not caused, it is possible that the available bandwidth is not effectively utilized. However, the data communication can be carried out to meet the network situation that is detected by the above communication optimizing process.
In this case, the controlling portion 13A applies the communication optimizing process every time when the data communication is executed. But the communication optimizing process explained above is executed every predetermined time period even though the data communication is not executed. As a result, the data transmission can be handled while utilizing the network whose condition is changed every moment without loss.

### (B-2: Operational Example 2)

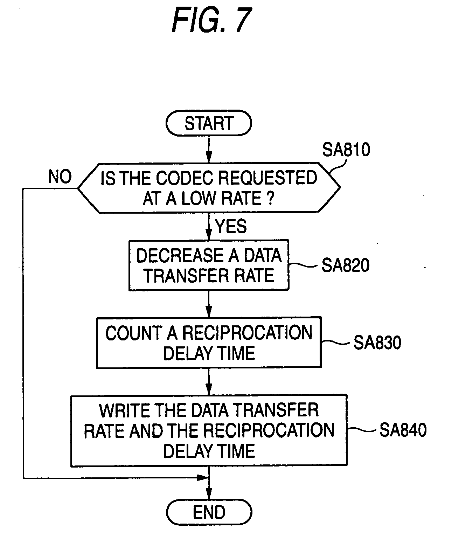

Next, in this operational example, the operation of the communication terminal 100A taken when a data loss (a packet loss, or the like) occurs during the data transmission, i.e., the data loss handling process in step SA800 in FIG.5, will be explained with reference to a flowchart shown in FIG.7 hereunder.

First, the controlling portion 13A decides whether or not the codec corresponding to a lower bit rate is present currently, by referring to the RAM 14bA (step SA810). If the decision result in step SA810 is "Yes", the controlling portion 13A decrease the data transfer rate by switching the codec whose bit rate is lower by one level (step SA820). Then, the controlling portion 13A counts the reciprocation delay time obtained immediately after the codec is switched (step SA830). Then, the controlling portion 13A stores the counted reciprocation delay time and the value of the bit rate immediately after the codec (step SA840). Thus, the controlling portion 13A ends the data loss handling process. If the decision result in step SA810 is "No", the controlling portion 13A also ends the data loss handling process.

The controlling portion 13A executed the data loss handling process only when the packet loss is caused. Therefore, the data transmission can be carried out without trouble by setting an appropriate data transfer ratio adequately.

(C: Variation) The embodiment of the present invention is explained as above. But the present invention can be carried out in various modes described hereunder.

(1) In the above embodiment, respective functions of the reciprocation delay time counting function, the data compression ratio controlling function, the RTP packet producing function, and the RTP packet transmitting/receiving function are provided to the communication terminal. But of course the installing object is not limited to the communication terminal. For example, the present invention may be applied to the data distribution server the carries out the streaming distribution of sound data or video data. In summary, any electronic equipment may be employed if such equipment is capable of handling the data communication. In such case, in place of the sound inputting portion 18, a memory device in which sound data or video data are stored may be provided to the electronic equipment, and then the data may be read adequately.

(2) In the above embodiment, the case where the functions peculiar to the communication terminal according to the present invention are implemented by the software module is explained. But the communication terminal according to the present invention may be constructed by combining respective hardware modules that bear the above functions.

(3) In the above embodiment, the case where RTP is used as the communication protocol of the application layer is explained. But it is of course that other communication protocol may be employed. In summary, any communication protocol may be employed if such communication protocol can write the sound data into the payload portion of the data block having the predetermined header portion and the payload portion for every predetermined time and then transmit the sound data. Also, in the above embodiment, the case where UDP is used as the communication protocol of the transport layer is explained. But TCP may be employed. Similarly, the communication protocol of the network layer is not limited to IP.

(4) In the above embodiment, the case where the sound data are transmitted/received is explained. But the type of data is not limited to the sound data. Any type of data such as moving picture data, or the like may be employed.

(5) In the above embodiment, the case where the communication terminal 100A and the communication terminal 100B are connected to the communication network 200 via cable is explained. But of course the communication network 200 may be constructed by the radio packet communication network such as the wireless LAN (Local Area Network), or the like, for example, and the communication terminal 100A and the communication terminal 100B may be connected to the radio packet communication network. Also, in the above embodiment, the case where the communication network 200 is the Internet is explained. Of course, LAN may be employed as the communication network. In summary, any communication network may be employed if such communication network is equipped with a function of transferring the communication that is made in accordance with the predetermined communication protocol.

(6) In the above embodiment, the case where the control programs for causing the controlling portion 13 to implement the functions peculiar to the communication device according to the present invention are loaded in advance into the ROM 14a is explained. But the control programs may be recorded in the computer-readable recording medium such as CD-ROM, DVD, or the like and then may be distributed. Alternately, the control programs may be of course distributed by downloading them via the telecommunication network such as the Internet, or the like.

(7) In the above embodiment, the case where it is detected whether or not the packet loss is caused is explained. But the data block as the detection object of the data loss is not limited to the packet. The segment or the frame may be employed.

(8) In the above embodiment, the case where, in the list stored in the ROM 14a, plural types of codecs are correlated with the bit rate values that are able to implement the codec respectively is explained. But the data in which the codecs are ranked according to the bit rate values may be stored instead of the list. In such case, in step SA610 or step SA810, it is possible to decide whether or not the codec whose bit rate is higher or lower than that of the codec being used currently is present. Also, the codec whose bit rate is higher or lower than that of the codec being used currently by one level may be chosen.

(9) In the above embodiment, the case where the bit rate is switched by changing the codec to be used is explained (step SA620, step SA820). But the bit rate may be switched not by changing the type of codec but by changing the setting regarding the bit rate.
In such case, the codec program by which plural bit rates can be set may be stored in the ROM 14a and then employed. Also, the decision as to "whether or not the higher bit rate can be set in the codec being used at present" may be applied as the decision contents in step SA610. In such case, if the decision result in step SA610 is "Yes", the controlling portion 13A increases the bit rate by changing the setting regarding the bit rate of the codec being used at that time in step SA620. That is, a compression ratio that should be set in the codec is lowered. Also, the decision as to "whether or not the lower bit rate can be set in the codec being used at present" may be applied as the decision contents in step SA810. In such case, if the decision result in step SA810 is "Yes", the controlling portion 13A decreases the bit rate by changing the setting regarding the bit rate of the codec being used at that time in step SA820. That is, a compression ratio that should be set in the codec is enhanced.
As described above, in order to switch the bit rate, the employed codec may be changed, or the setting regarding the bit rate may be changed without change of the type of the codec. In summary, the bit rate may be controlled by changing a compression mode of the data.

(10) In the above embodiment, the case where the codec is employed as the program for compressing/expanding (encoding/ decoding) the sound data is explained. But the type of the program is not limited to the codec. Also, a compression program except the codec, e.g., the program for executing only the compression of the sound data, may be employed.

The present invention is explained in detail with reference to the particular embodiment. But it is apparent for those skilled in the art that various variations and modifications can be applied without departing from a spirit, a scope, or an intended range of the present invention.
This application is based upon Japanese Patent Application (Patent Application No.2006-247080) filed on September 12, 2006 and Japanese Patent Application (Patent Application No.2007-233810) filed on September 10, 2007, the contents of which are incorporated herein by reference.

## Claims

1. A communication device for holding a communication with a destination device via a communication network, comprising:
a controlling section which compresses data in a first compression mode;
a transmitting section which transmits the compressed data to the destination device via the communication network; and
a receiving section which receives an acknowledge message via the communication network when the destination device transmits the acknowledge message indicating an effect that the compressed data are received;
wherein the controlling section decides whether or not the first compression mode is to be continued, based on a state of the acknowledge message received by the receiving section, and chooses a second compression mode and compresses the data in the second compression mode if it is decided that the first compression mode is not to be continued.

2. A communication device for holding a communication with a destination device via a communication network, comprising:
a controlling section which compresses data by a first codec;
a transmitting section which transmits the compressed data to the destination device via the communication network; and
a receiving section which receives an acknowledge message via the communication network when the destination device transmits the acknowledge message indicating an effect that the compressed data are received;
wherein the controlling section decides whether or not the data compression by using the first codec is to be continued, based on a state of the acknowledge message received by the receiving section, and chooses a second codec and compresses the data by using the second codec if it is decided that the data compression is not to be continued.

3. The communication device according to claim 2, further comprising:
a storing section which stores a table that correlates codecs with transfer rates being set in the codecs; and
wherein, when the acknowledge message is not received by the receiving section, the controlling section chooses a codec being correlated with a transfer rate lower than a transfer rate of the first codec in the table as the second codec, and compresses the data by using the second codec.

4. The communication device according to claim 2 or 3, further comprising:
a storing section which stores a table that correlates codecs with transfer rates being set in the codecs; and
wherein, when the acknowledge message is received by the receiving section earlier than a predetermined time, the controlling section chooses a codec being correlated with a transfer rate higher than a transfer rate of the first codec in the table as the second codec, and compresses the data by using the second codec.

5. A communication device for holding a communication with a destination device via a communication network, comprising:
a controlling section which compresses data by a codec in which a plurality of data transfer rates are set and a compression ratio that satisfies a first data transfer rate is set;
a transmitting section which transmits the data compressed by the codec to the destination device via the communication network; and
a receiving section which receives an acknowledge message via the communication network when the destination device transmits the acknowledge message indicating an effect that the compressed data are received;
wherein the controlling section chooses a second data transfer rate based on a state of the acknowledge message received by the receiving section, and compress the data by using the codec in which a compression ratio that satisfies the second data transfer rate is set.

6. The communication device according to claim 5, wherein, when the acknowledge message is not received by the receiving section, the controlling section chooses a data transfer rate that is lower than the first data transfer rate as the second data transfer rate, and compresses the data by using the codec in which a compression ratio that satisfies the chosen data transfer rate is set.

7. The communication device according to claim 5 or 6, wherein, when the acknowledge message is received by the receiving section earlier than a predetermined time, the controlling section chooses a data transfer rate that is higher than the first data transfer rate as the second data transfer rate, and compresses the data by using the codec in which a compression ratio that satisfies the chosen data transfer rate is set.

8. A communication method of holding a communication with a destination device via a communication network, comprising:
compressing data in a first compression mode;
transmitting the compressed data to the destination device via the communication network;
receiving an acknowledge message via the communication network when the destination device transmits the acknowledge message indicating an effect that the compressed data are received;
deciding whether or not the first compression mode is to be continued, based on a state of the received acknowledge message; and
choosing a second compression mode and compressing the data in the second compression mode if it is decided that the first compression mode is not to be continued.

9. A communication method of holding a communication with a destination device via a communication network, comprising:
compressing data by a first codec;
transmitting the compressed data to the destination device via the communication network;
receiving an acknowledge message via the communication network when the destination device transmits the acknowledge message indicating an effect that the compressed data are received;
deciding whether or not the data compression by using the first codec is to be continued, based on a state of the received acknowledge message; and
choosing a second codec and compressing the data by using the second codec if it is decided that the data compression is not to be continued.

10. A communication method of holding a communication with a destination device via a communication network, comprising:
compressing data by a codec in which a plurality of data transfer rates are set and a compression ratio that satisfies a first data transfer rate is set;
transmitting the data compressed by the codec to the destination device via the communication network;
receiving an acknowledge message via the communication network when the destination device transmits the acknowledge message indicating an effect that the compressed data are received;
choosing a second data transfer rate based on a state of the received acknowledge message; and
compressing the data by using the codec in which a compression ratio that satisfies the second data transfer rate is set.

11. A computer-readable recording medium for storing a computer-readable program that causes a computer to function as:
compressing data in a first compression mode;
transmitting the compressed data to the destination device via the communication network;
receiving an acknowledge message via the communication network when the destination device transmits the acknowledge message indicating an effect that the compressed data are received;
deciding whether or not the first compression mode is to be continued, based on a state of the received acknowledge message; and
choosing a second compression mode and compressing the data in the second compression mode if it is decided that the first compression mode is not to be continued.

12. A computer-readable recording medium for storing a computer-readable program that causes a computer to function as:
compressing data by a first codec;
transmitting the compressed data to the destination device via the communication network;
receiving an acknowledge message via the communication network when the destination device transmits the acknowledge message indicating an effect that the compressed data are received;
deciding whether or not the data compression by using the first codec is to be continued, based on a state of the received acknowledge message; and
choosing a second codec and compressing the data by using the second codec if it is decided that the data compression is not to be continued.

13. A computer-readable recording medium for storing a computer-readable program that causes a computer to function as:
compressing data by a codec in which a plurality of data transfer rates are set and a compression ratio that satisfies a first data transfer rate is set;
transmitting the data compressed by the codec to the destination device via the communication network;
receiving an acknowledge message via the communication network when the destination device transmits the acknowledge message indicating an effect that the compressed data are received;
choosing a second data transfer rate based on a state of the received acknowledge message; and
compressing the data by using the codec in which a compression ratio that satisfies the second data transfer rate is set.
